# EUROPEAN PATENT APPLICATION

(11) **EP 2 626 929 A1**
(43) Date of publication of application: **14.08.2013**
(21) Application number: 13154506.3
(22) Date of filing: 08.02.2013
(51) Int. Cl.: H01M 2/10, H02J 7/00, H04M 1/02

(54) **Battery external connection device for use with mobile phone and flip cover having the device**

(30) Priority: 10.02.2012 TW 101104309
(71) Applicant: Mixartron Ltd., Taipei City (TW)
(72) Inventor: Tseng, Tien-Chun, Taipei City (TW)
(74) Representative: Viering, Jentschura & Partner

(57) **Abstract**

A flip cover applying to a mobile phone and having a battery external connection device includes a front unit and a rear unit connected to the front unit and is characterized by: an ultra-thin rechargeable battery; the front unit having therein a sandwich space for accommodating and thereby storing the ultra-thin rechargeable battery; the rear unit having thereon a battery external connection device and functioning as a back cover of the mobile phone to substitute for an original back cover of the mobile phone; a battery external connection device including a first electrical connection terminal and a second electrical connection terminal which are electrically connected to a positive pole and a negative pole of the ultra-thin rechargeable battery, respectively.

## Description

### FIELD OF THE INVENTION

The present invention relates to a means of expandable connection of an external battery for use with a mobile phone, and more particularly, to a battery external connection device for use with a mobile phone and a flip cover having the device.

### BACKGROUND OF THE INVENTION

A prior art is related to a solar cell-powered mobile phone with a flip cover that discloses a solar cell-powered mobile phone with a flip cover, comprising a host and a flip cover on a front side thereof. A solar cell panel is disposed inside the external side of the flip cover. The flip cover is covered with a transparent layer. The solar cell panel is connected to a rechargeable battery of the host and a circuit board via a control circuit for use in controlling charging and discharging. The solar cell panel is disposed on a rear cover of the host, and the solar cell panel is covered with a transparent layer. The solar cell panel is connected to the control circuit.

Another prior art is related to a battery holder for a mobile phone that comprises a mobile phone front case and a mobile phone rear case. The mobile phone front case, the mobile phone rear case, an inner surface of a keying board, and an inner surface of a motherboard together define an opening cavity. A battery connector for connecting a battery and the motherboard is disposed at the top of the cavity. A battery fastening-releasing mechanism is disposed at the bottom of the cavity. The above said prior art uses a battery inward insertion structure to thereby dispense with a plastic wall thickness between the battery and a component, and thus the overall thickness of the mobile phone in its entirety is reduced by one third approximately, such that the mobile phone looks more compact and is easier to carry than it has ever been. Furthermore, due to a resilient component disposed in the battery connector, the battery is actually ejected in order to be removed, thereby rendering it easier to change the battery than it has ever been.

The inventor of the present invention realizes that, although the aforesaid prior arts disclose a flip cover capable of generating power, conventional battery holders for use with mobile phones are not capable of being expandably connected to an external battery, not to mention that conventional flip covers for use with mobile phones are widely applied to mobile phones. Hence, the inventor of the present invention devises a battery external connection device for use with a mobile phone and a flip cover having the device.

### SUMMARY OF THE INVENTION

The first objective of the present invention is to provide a battery external connection device that is applied to a mobile phone and expandably connected to an external battery.

The second objective of the present invention is to provide a flip cover that is applied to a mobile phone and capable of functioning as a conventional flip cover and generating power to thereby supply secondary power to the mobile phone.

In order to achieve the first objective, the present invention provides a battery external connection device for use with a mobile phone, wherein the mobile phone comprises a battery receiving chamber and a battery holder, the battery holder being disposed in the battery receiving chamber and comprising a battery positive pole electrical connection terminal and a battery negative pole electrical connection terminal. The battery external connection device is **characterized in that** the battery external connection device comprises: a first electrical connection terminal electrically connected to the battery positive pole electrical connection terminal; and a second electrical connection terminal electrically connected to the battery negative pole electrical connection terminal, wherein the first electrical connection terminal and the second electrical connection terminal are electrically connected to a positive pole and a negative pole of an external battery positioned outside the mobile phone, respectively.

In order to achieve the second objective, the present invention provides a flip cover applying to a mobile phone and having a battery external connection device, the flip cover comprising a front unit and a rear unit connected to the front unit, the flip cover being characterized by: an ultra-thin rechargeable battery; the front unit having therein a sandwich space for accommodating and thereby storing the ultra-thin rechargeable battery; the rear unit having thereon a battery external connection device and functioning as a back cover of a mobile phone to thereby substitute for an original back cover of the mobile phone; and the battery external connection device comprising a first electrical connection terminal and a second electrical connection terminal, wherein the first electrical connection terminal and the second electrical connection terminal are electrically connected to a positive pole and a negative pole of the ultra-thin rechargeable battery, respectively.

### BRIEF DESCRIPTION OF THE DRAWINGS

Objectives, features, and advantages of the present invention are hereunder illustrated with specific embodiments in conjunction with the accompanying drawings, in which:
FIG. 1 is a structural schematic view of a battery external connection device according to the first specific embodiment of the present invention;
FIG. 2 is a structural schematic view of the battery external connection device according to the second specific embodiment of the present invention;
FIG. 3 is a structural schematic view of the battery external connection device according to the third specific embodiment of the present invention;
FIG. 4 is a block diagram of electrical connection of the battery external connection device and its peripheral components according to the present invention;
FIG. 5 is a schematic front view of a flip cover having a battery external connection device according to the present invention;
FIG. 6 is a cross-sectional view of the battery external connection device-equipped flip cover taken along line A-A of FIG. 5 according to the present invention;
FIG. 7 is a schematic front view of operation of the flip cover having a battery external connection device according to the present invention;
FIG. 8 is a schematic rear view of operation of the flip cover having a battery external connection device according to the present invention; and
FIG. 9 is a schematic rear view of operation of the flip cover having a battery external connection device according to a variant embodiment of the present invention.

### DETAILED DESCRIPTION OF THE EMBODIMENTS

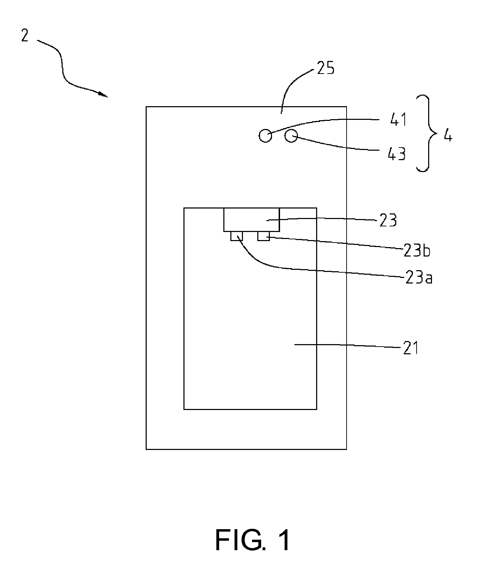

Referring to FIG. 1 through FIG. 4, according to the present invention, a battery external connection device 4 for use with a mobile phone 2 is intended to be electrically connected to an external battery 15. The external battery 15 is located outside the mobile phone 2. In general, the mobile phone 2 comprises a battery receiving chamber 21 and a battery holder 23. The battery holder 23 is disposed in the battery receiving chamber 21. The battery holder 23 comprises a battery positive pole electrical connection terminal 23a and a battery negative pole electrical connection terminal 23b.

The battery external connection device 4 comprises a first electrical connection terminal 41 and a second electrical connection terminal 43 which are electrically connected to the battery positive pole electrical connection terminal 23a and the battery negative pole electrical connection terminal 23b, respectively. A positive pole and a negative pole of the external battery 15 are electrically connected to the first electrical connection terminal 41 and the second electrical connection terminal 43, respectively.

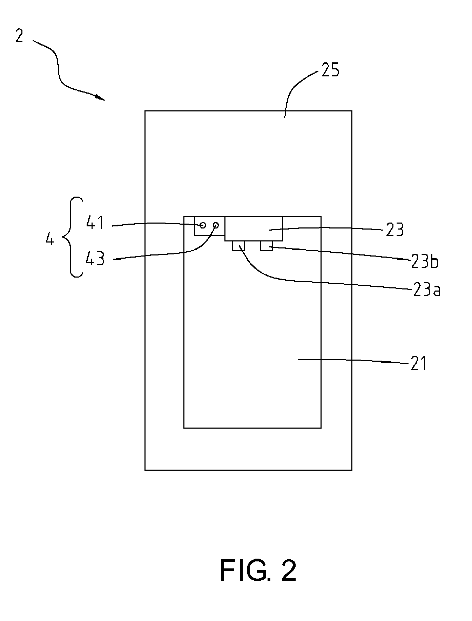

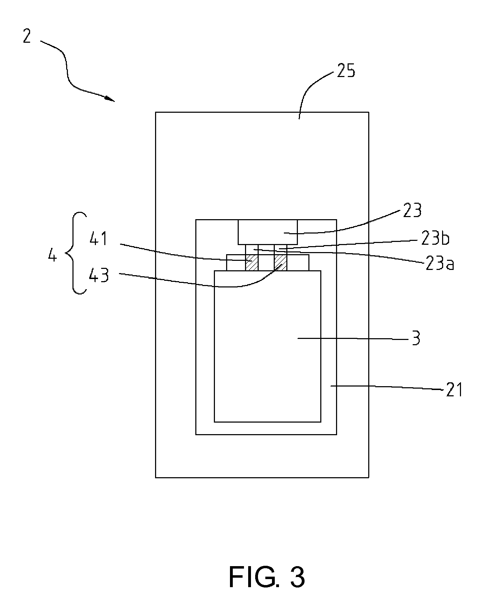

Referring to FIG. 1, there is shown a structural schematic view of the battery external connection device 4 according to the first specific embodiment of the present invention. As shown in FIG. 1, the first electrical connection terminal 41 and the second electrical connection terminal 43 of the battery external connection device 4 are disposed on a back 25 of the mobile phone 2 and exposed from the back 25. Referring to FIG. 2, there is shown a structural schematic view of the battery external connection device 4 according to the second specific embodiment of the present invention. As shown in FIG. 2, the first electrical connection terminal 41 and the second electrical connection terminal 43 of the battery external connection device 4 are positioned proximate to the battery holder 23 and thus positioned to be coverable by a back cover (not shown) of the mobile phone 2. Referring to FIG. 3, there is shown a structural schematic view of the battery external connection device 4 according to the third specific embodiment of the present invention. As shown in FIG. 3, the first electrical connection terminal 41 and the second electrical connection terminal 43 of the battery external connection device 4 are disposed between the battery positive pole electrical connection terminal 23a, the battery negative pole electrical connection terminal 23b, and a battery 3, and are clamped between the battery positive pole electrical connection terminal 23a, the battery negative pole electrical connection terminal 23b, and the battery 3, wherein the battery 3 is disposed in the battery receiving chamber 21.

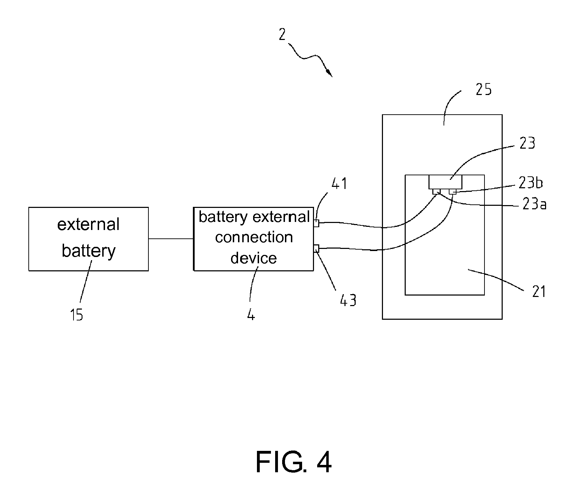

Specific examples of the mobile phone 2 according to the present invention include a conventional mobile phone and a conventional smartphone. Referring to FIG. 4, in the first, second, and third specific embodiments of the present invention, the battery external connection device 4 is directly electrically connected to the battery holder 23 of the mobile phone 2; hence, when equipped with the battery external connection device 4 of the present invention, the conventional mobile phone can be expandably connected to an external battery conveniently.

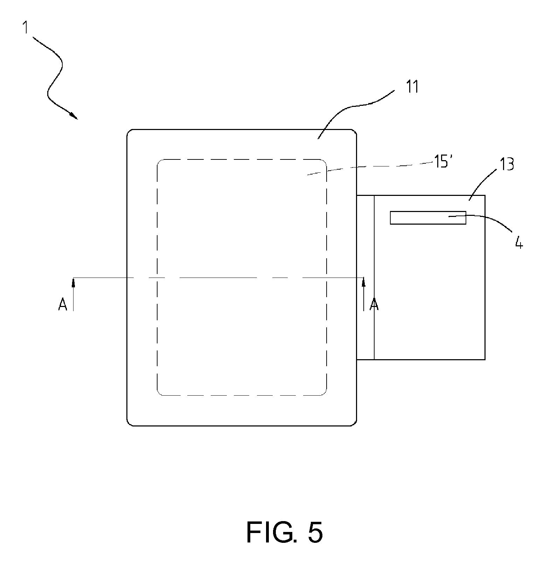

According to the spirit embodied in the battery external connection device 4 of the present invention, a flip cover 1 of the present invention is formed by combining the battery external connection device 4 with a conventional flip cover, such that the flip cover 1 thus formed is structurally novel. Referring to FIG. 5, the flip cover 1 for use with a mobile phone according to the present invention essentially comprises a front unit 11, a rear unit 13, an ultra-thin rechargeable battery 15', and the battery external connection device 4. The front unit 11 and the rear unit 13 are connected together, thereby forming one said flip cover 1. According to the present invention, a specific embodiment of a lateral flip cover is illustrated herein. However, according to the present invention, it is also feasible to replace the lateral flip cover with an upper flip cover or a lower flip cover. The ultra-thin rechargeable battery 15' is a specific example of the external battery 15.

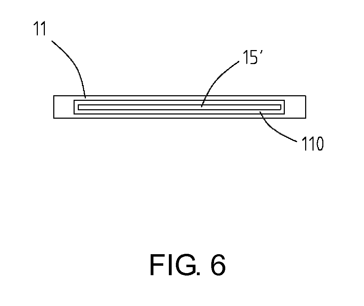

Referring to FIG. 6, the front unit 11 has therein a sandwich space 110. The purpose of the sandwich space 100 is to accommodate and thereby store the ultra-thin rechargeable battery 15'. The front unit 11 is made of an animal hide, a synthetic leather, or a plastic. As soon as the front unit 11 gets close to the mobile phone 2, the front unit 11 comes into contact with a touch display panel 20 of the mobile phone 2.

The battery external connection device 4 is disposed at an appropriate position on the rear unit 13. The rear unit 13 functions as the back cover for the mobile phone 2, so as to substitute for an original back cover of the mobile phone 2. Before the back of the mobile phone 2 has been covered with the rear unit 13, the user makes the battery external connection device 4 come into contact with the battery positive pole electrical connection terminal 23a and the battery negative pole electrical connection terminal 23b of the battery holder 23 in the battery receiving chamber 21 of the mobile phone 2 and then puts the rear unit 13 on the back of the mobile phone 2. In doing so, the battery external connection device 4 lies between the battery 3 in the battery receiving chamber 21, the battery positive pole electrical connection terminal 23a, and the battery negative pole electrical connection terminal 23b.

The purpose of the ultra-thin rechargeable battery 15' is to supply secondary power or standby power to the mobile phone 2. Current from the ultra-thin rechargeable battery 15' passes through the battery external connection device 4, the battery positive pole electrical connection terminal 23a, and the battery negative pole electrical connection terminal 23b before being supplied to the mobile phone 2. The ultra-thin rechargeable battery 15' can be exemplified by a conventional lithium ultra-thin rechargeable battery, and preferably a conventional lithium ultra-thin rechargeable battery of a thickness not larger than 1mm, such as a conventional polymer lithium rechargeable battery of a thickness not larger than 1mm. In doing so, the total thickness of the front unit 11 will not be greatly affected to thereby bring inconvenience to users.

The ultra-thin rechargeable battery 15' is in the number of one or more. Multiple said ultra-thin rechargeable batteries 15' are connected in series or in parallel to increase the voltage or current of the power supplied.

As regards its thickness, the battery external connection device 4 of the flip cover 1 is preferably an ultra-thin interconnect to circumvent a problem: due to the battery external connection device 4, the original battery 3 is prevented from being accommodated in the battery receiving chamber 21.

Once the ultra-thin rechargeable battery 15' needs to be recharged, an external charging current can be supplied to the ultra-thin rechargeable battery 15' through an electrical jack (not shown) of the mobile phone 2, such as an electrical jack of a Mini USB connector, the battery positive pole electrical connection terminal 23a, the battery negative pole electrical connection terminal 23b, and the battery external connection device 4.

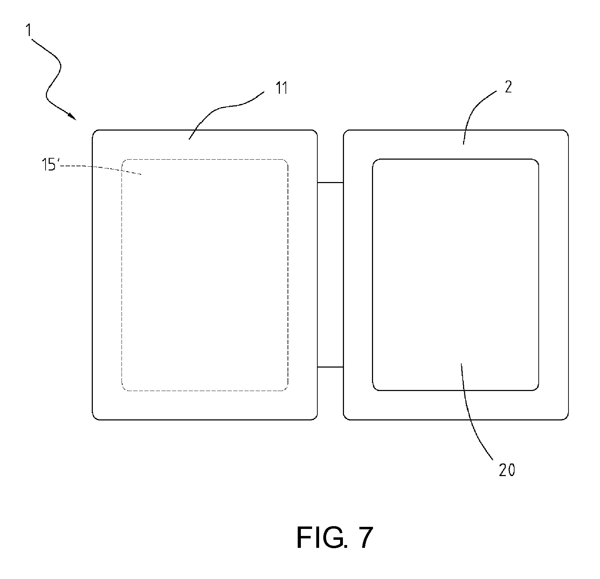

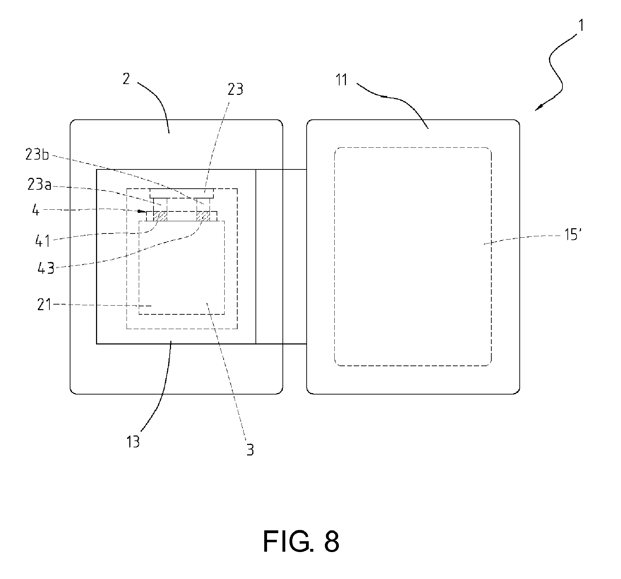

Referring to FIG. 7 and FIG. 8, an assembly process of the mobile phone 2 and the flip cover 1 involves: dismounting the original back cover; loading the original battery 3; positioning the battery external connection device 4 between the battery 3, the battery positive pole electrical connection terminal 23a, and the battery negative pole electrical connection terminal 23b of the battery holder 23; and eventually mounting the rear unit 13.

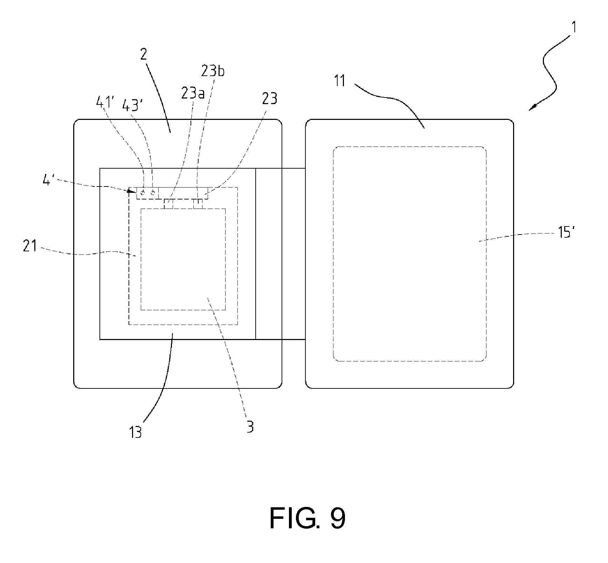

Referring to FIG. 9, there is shown a schematic rear view of operation of the flip cover 1 having a battery external connection device 4' according to a variant embodiment of the present invention. The battery external connection device 4' is disposed on the rear unit 13 and faces the lateral side of the battery holder 23. In particular, the battery external connection device 4' corresponds in position to the battery external connection device 4 of FIG. 2. As soon as the rear unit 13 and the mobile phone 2 meet, a first electrical connection terminal 41' and a second electrical connection terminal 43' of the battery external connection device 4' come into contact with the first electrical connection terminal 41 and the second electrical connection terminal 43 of the battery external connection device 4, respectively.

Accordingly, the battery external connection device 4 of the present invention can be expandably connected to an external battery. Accordingly, the flip cover 1 of the present invention is not only capable of operating in a manner that combine the function of a conventional flip cover and the function of a conventional mobile phone, but also supplies power, that is, supplying secondary power to the mobile phone 2. The above-mentioned are the advantages of the present invention.

Hence, the present invention meets the three requirements of patentability, namely novelty, non-obviousness, and industrial applicability.

The present invention is disclosed above by preferred embodiments. However, persons skilled in the art should understand that the preferred embodiments should not be interpreted as restrictive of the scope of the present invention. Hence, all equivalent changes and modifications made to the aforesaid embodiments should fall within the scope of the present invention.

## Claims

1. A battery external connection device for use with a mobile phone, wherein the mobile phone comprises a battery receiving chamber and a battery holder, the battery holder being disposed in the battery receiving chamber and comprising a battery positive pole electrical connection terminal and a battery negative pole electrical connection terminal, the battery external connection device comprising:
a first electrical connection terminal electrically connected to the battery positive pole electrical connection terminal; and
a second electrical connection terminal electrically connected to the battery negative pole electrical connection terminal,
wherein the first electrical connection terminal and the second electrical connection terminal are electrically connected to a positive pole and a negative pole of an external battery of the mobile phone, respectively.

2. The battery external connection device of claim 1, wherein the first electrical connection terminal and the second electrical connection terminal are disposed on a back of the mobile phone and exposed from the back.

3. The battery external connection device of claim 1, wherein the first electrical connection terminal and the second electrical connection terminal are positioned proximate to the battery holder and thus positioned to be coverable by a back cover of the mobile phone.

4. The battery external connection device of claim 1, wherein the first electrical connection terminal and the second electrical connection terminal are disposed between the battery positive pole electrical connection terminal, the battery negative pole electrical connection terminal, and a battery, and are clamped between the battery positive pole electrical connection terminal, the battery negative pole electrical connection terminal, and the battery, wherein the battery is disposed in the battery receiving chamber.

5. A flip cover applying to a mobile phone, having a battery external connection device according to claim 1, wherein the flip cover comprising a front unit and a rear unit connected to the front unit, the flip cover being **characterized by**:
an ultra-thin rechargeable battery;
the front unit having therein a sandwich space for accommodating and thereby storing the ultra-thin rechargeable battery;
the rear unit having thereon a battery external connection device and functioning as a back cover of a mobile phone to thereby substitute for an original back cover of the mobile phone; and
wherein the first electrical connection terminal and the second electrical connection terminal are electrically connected to a positive pole and a negative pole of the ultra-thin rechargeable battery, respectively.

6. The battery external connection device of claim 5, wherein the ultra-thin rechargeable battery is a polymer lithium rechargeable battery.

7. The battery external connection device of claim 5, wherein the ultra-thin rechargeable battery is of a thickness not larger than 1mm.

8. The battery external connection device of claim 5, wherein the first electrical connection terminal and the second electrical connection terminal are clamped between a battery and a battery holder of the mobile phone, wherein the battery is disposed in a battery receiving chamber of the mobile phone.

9. The battery external connection device of claim 5, the battery external connection device is disposed on the flip cover.

10. The battery external connection device of claim 9, wherein the first electrical connection terminal and the second electrical connection terminal are in contact with another battery external connection device of the mobile phone respectively, and the another battery external connection device is disposed at a battery holder positioned proximate to the mobile phone and is disposed at a position coverable by the rear unit.
